# EUROPEAN PATENT SPECIFICATION

(11) **EP 0 509 104 B1**
(45) Date of publication and mention of the grant of the patent: **09.08.1995**
(21) Application number: 91918594.2
(22) Date of filing: 29.10.1991
(51) Int. Cl.: B29C 45/76, B29C 45/17, B23Q 1/00

(54) **INJECTION MOLDING MACHINE WITH MOVABLE DISPLAY DEVICE**
SPRITZGIESSMASCHINE MIT BEWEGBAREM ANZEIGEBILDSCHIRM
MACHINE DE MOULAGE A INJECTION AVEC DISPOSITIF DE VISUALISATION MOBILE

(30) Priority: 02.11.1990 JP 295542/90
(43) Date of publication of application: 21.10.1992
(73) Proprietor: FANUC LTD., Minamitsuru-gun, Yamanashi 401-05 (JP)
(72) Inventor: ITO, Susumu, Room 7-204, Fanuc Manshonharimomi, Yamanashi 401-05 (JP); YAMAMURA, Masato, Rm 8-107, Fanuc Manshonharimomi, Yamanashi 401-05 (JP); NISHIMURA,Koichi, Rm 4-305, Fanuc Manshonharimomi, Yamanashi 401-05 (JP)
(74) Representative: Billington, Lawrence Emlyn
(86) International application number: JP9101478
(87) International publication number: WO9207700

(56) References cited:
- EP-A- 0 336 249
- WO-A-89/02339
- FR-A- 2 561 163
- JP-A-63 107 534
- JP-U- 1 116 614
- JP-U-61 087 914

## Description

The present invention relates to an injection molding machine equipped with a movable display unit.

In an injection molding machine, especially in an electric motor driven injection molding machine including a numerical control apparatus, a display unit equipped with a display screen and a manual data input device is utilized for setting various molding conditions, monitoring operational conditions, alarming for the possible occurrence of abnormal operational condition and so on. Thus, the display unit plays an important role in the injection molding machine.

Known conventional display units for injection molding machines are broadly categorized into three types: a stand type characterized in that a display unit is fixedly mounted on the top of a stand vertically standing from a floor, a built-in type characterized in that a display unit is housed inside the injection molding machine, and a pendant type which is characterized in that a display unit is suspended from a swing arm.

The stand type display unit has a disadvantage in that it can be an obstacle to workers who are to carry out various tasks, since it is fixedly disposed at the periphery of the injection molding machine. The built-in type display unit, especially a large size CRT display unit, large in both size and weight, naturally requires not only a larger housing space but also a significant amount of labor for installation on and removal from the injection molding machine.

The pendant type display unit (for example, refer to one disclosed in the Japanese Unexamined Patent Application JP, A-63-107534 corresponding to EP-A-0 264 601) is convenient in that the display unit can change its position between an operational position, and a retracted position over the injection unit cf. the preamble of claim 1. However, due to the restriction of mechanical strength, the length of its swing arm hanging the display unit must be limited. Thus, the movable range of the display unit is correspondingly limited. This is a drawback to the operability of the display unit, since an operator is limited in changing the position of the display unit to the optimum point.

Besides, the swing arm needs to be placed at a fairly high position in order to avoid interference between the display unit and the main body of the injection molding machine. To this end, the pole to support the swing arm is inevitably required to have a considerable length. This naturally requires an increase in the rigidity of the supporting pole, with an accompanying increase in the cost.

Moreover, the pendant type display unit is usually positioned higher than the operation board of the injection molding machine, so that the operator needs to turn his eyes upward every time he watches the display screen or manipulates the data input apparatus of the display unit. Or, in the case where the operator has to alternately repeat the monitoring or manipulation of the display screen and the operation of the operation board of the injection molding machine, the operator is required to frequently turn his eyes in an up-and-down direction. Thus, the pendant type display unit is disadvantageous in that the operator is required to turn his eyes so frequently.

An object of the present invention is to provide an injection molding machine equipped with a movable display unit capable of improving its operability and visibility without causing interference between the display unit and the operators in the periphery of the injection molding machine, as well as requiring little or no housing space inside the injection molding machine.

According to the present invention there is provided an injection molding machine in which a mold clamping unit and an injection unit are disposed on a base opposite to each other with an operation panel located between them, and said injection molding machine comprises: a first supporting means disposed on an upper front surface of said base; a swing arm having a base end portion supported on the base through said first supporting means so as to be swingable in a horizontal plane; a second supporting means provided at a front end portion of said swing arm; and a display unit mounted on said second supporting means so as to be swingable with respect to said swing arm; wherein said first supporting means supports the swing arm at substantially the same height as the upper surface of the base with the front end portion of the swing arm extending horizontally at substantially the same height as the upper surface of the base; said second supporting means supports the display unit above the swing arm; said swing arm has a first position, when positioned at one limit of its swing range, disposed between the mold clamping unit and the injection unit along the upper front surface of the base, in which first swing arm position the display unit can itself adopt a first display unit swing position which is a usual position during operation of the injection molding machine in which the display unit faces to the front of the injection molding machine and away therefrom, and can also adopt in said first swing arm position a second display unit swing position wherein the display unit is turned more towards the operation panel for convenience of an operator when standing in front of the operation panel; and said swing arm also has a second swing arm position which can be adopted by swinging the swing arm outwardly away from the base so that the display unit adopts a retracted position away from the injection unit.

As described above, in the injection molding machine according to the present invention, the display unit is rotatably supported on the swing arm which is supported swingably on the front surface side of the base of the injection molding machine. Thus, the display unit can be moved to any desired position as the operator wishes.

Thus, the operability and visibility of the display unit for the operator can be improved without causing interference between the display unit and workers at the periphery of the injection molding machine. Further, the display unit in accordance with the present invention is, unlike the conventional unit of built-in type, superior in that it requires no housing space inside the injection molding machine.

Furthermore, since the swing arm is disposed at the same height as the upper surface of the base, the vertical position of the display unit can be optimized to improve the operability and visibility of the display unit.

### BRIEF DESCRIPTION OF DRAWINGS

Fig. 1 is a schematic front view showing one embodiment of an electric motor driven injection molding machine in accordance with the present invention;
Fig. 2 is a partial schematic plane view showing part of the injection molding machine when its display unit is placed at its usual position;
Fig. 3 is a partial schematic plane view showing part of the injection molding machine when its display unit is placed at its operational position;
Fig. 4 is a partial schematic plane view showing part of the injection molding machine when its display unit is placed at its retracted position;
Fig. 5 is a partial enlarged perspective view showing a swing arm and its peripheral components;
Fig. 6 is a partial enlarged cross-sectional front view showing a swing arm supporting means;
Fig. 7 is a partial enlarged cross-sectional front view showing a modified embodiment of the swing arm supporting means; and,

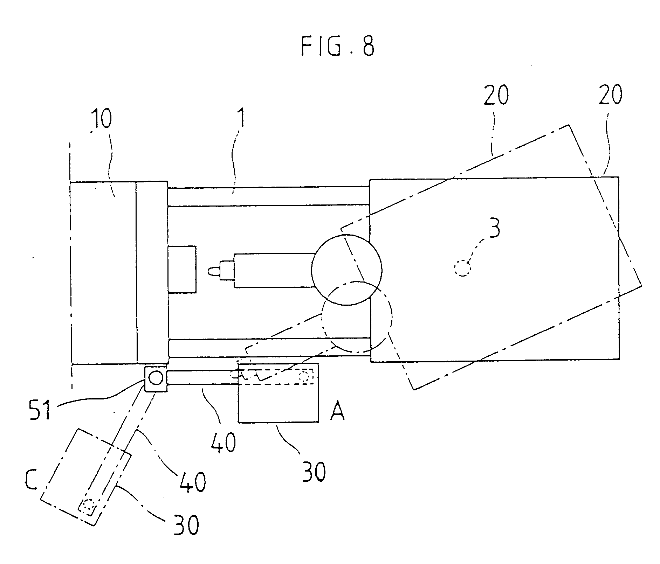

Fig. 8 is a partial schematic plane view showing a modified embodiment for the position of installation of the swing arm supporting means with respect to the injection machine.

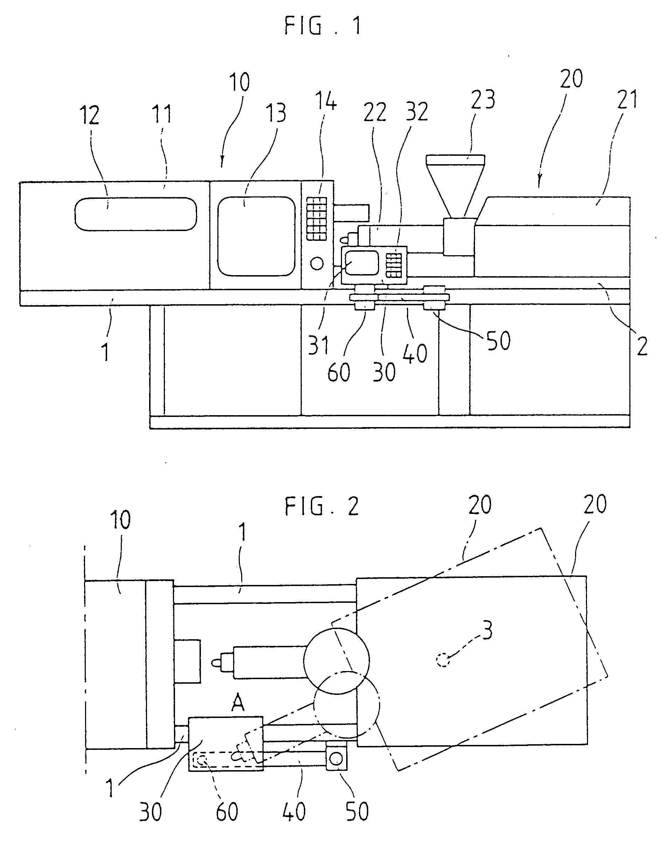

Hereinafter, referring to Figs. 1 to 6, one embodiment of an electric motor driven injection molding machine according to the present invention will be explained.

As shown in Fig. 1, the injection molding machine includes a mold clamping unit 10 fixed on a base 1 made of hollow shape steels. The mold claimping unit 10 has a protective cover 11 covering the whole mold clamping mechanism (not shown). The protective cover 11 is provided with windows 12 and 13 with transparent panels on its front surface for monitoring operating conditions of the mold clamping mechanism, whereas provided on a right end front surface of the protective cover 11 is an operation panel 14 for controlling various operations such as start-up, stop, emergency shutdown, manual operation mode, semi-auto operation mode, full-auto operation mode etc.

Furthermore, the injection molding machine includes an injection unit 20 disposed on the base 1, opposite to the mold clamping unit 10, via an extruder base 2. The injection unit 20 comprises: a protective cover (for the body of the injection unit) 21 covering an injection mechanism (not shown) including a front plate, a movable plate, a rear plate, a cylinder assembly 22 housing an injection screw (not shown) detachably installed on the injection unit main body; and a hopper 23 disposed above the base end portion of the cylinder assembly 22.

The injection unit 20 is constituted for being capable of approaching to or departing from the mold clamping unit 10 together with the extruder base 2 on the base 1 so that a nozzle touch condition can be established or released. Moreover, the injection unit 20 is horizontally swingable about a swivel shaft 3 provided on the extruder base 2. The injection molding machine further comprises a movable display unit 30 having a CRT screen 31 and a manual data input apparatus 32, so that control information fed from a numerical control apparatus (not shown) can be displayed on the CRT screen 31, and an operator can manually input various data through the data input device 32.

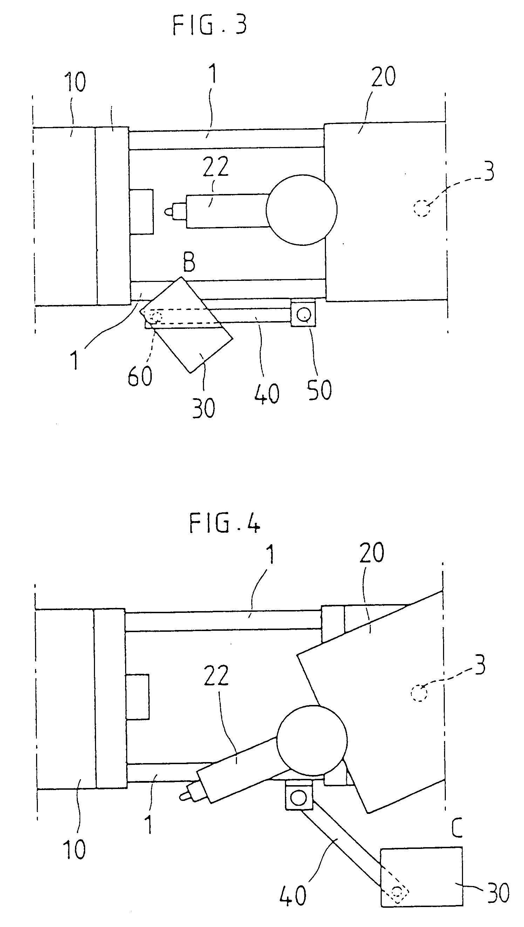

The display unit 30 is supported on the front end portion of a swing arm 40 for being swingable in a horizontal plane. This swing arm 40 is also supported on the front surface of the base 1 for being swingable in a horizontal direction. That is, the display unit 30 can be swung with respect to the swing arm 40 so that it can selectively be set to any of its usual position A (Fig. 2), operational position B (Fig. 3) and its retracted position C (Fig. 4).

The swing arm 40 is made of a hollow shape steel having rectangular cross section and is slightly shorter than the distance between opposing surfaces of the mold clamping unit and the injection unit main body 21.

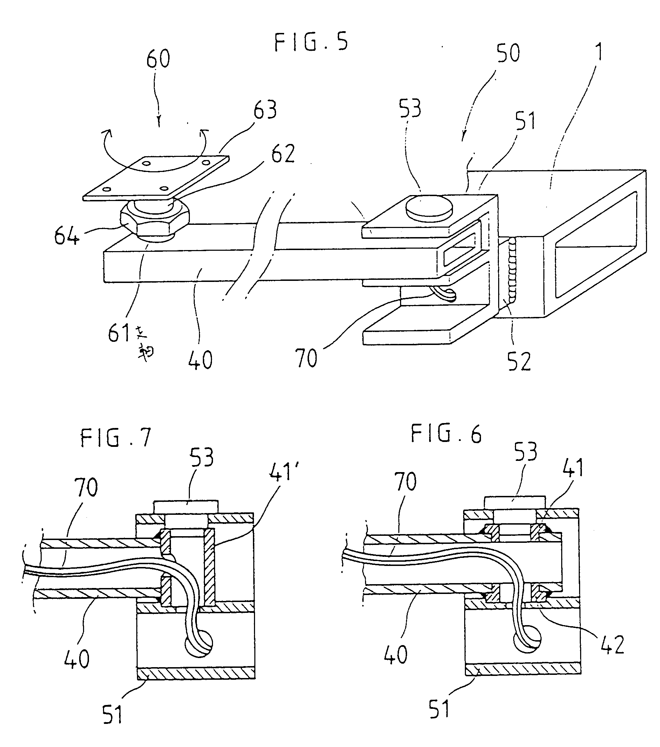

In usual condition, the swing arm 40 is disposed between mold clamping unit 10 and the injection unit 20 in a longitudinal direction of the injection molding machine, extending horizontally along the upper front surface of the base 1 (Figs. 1 and 5). And, the swing arm 40 has through holes in its upper and lower walls of its end portion. A pair of upside and downside circular collars 41 and 42 are fit into these through holes and welded to the swing arm 40 respectively.

The injection molding machine has the first supporting means 50 disposed on the upper front surface side of the base 1 to swingably support the swing arm 40 in a horizontal plane. A bracket 51 of the first supporting means 50 is fixed on the upper front wall of the base 1 through a rectangular shaped steel stay 52 between the mold clamping unit 10 and the injection unit 20.

The bracket 51 has a vertical wall fixed to the stay 52 and an upper wall integrally formed with the vertical wall and extending horizontally from the upper end of the vertical wall, an intermediate wall integrally formed with the vertical wall and extending horizontally from the intermediate portion of the vertical wall, and a lower wall integrally formed with the vertical wall and extending horizontally from the lower end of the vertical wall.

A distance between the upper wall and the intermediate wall is made slightly larger than the distance between the upper surface of the upside collar 41 and the lower surface of the downside collar 42, so that the swing arm 40 can be inserted into a recessed space partitioned by the upper wall and the intermediate wall.

The intermediate wall of the bracket 51 is formed with a hole having a bottom so that a flange portion of the downside collar 42 is fitted into this hole. Further, this hole communicates with a small-diameter through hole for inserting a cable.

On the other hand, the upper wall of the bracket 51 is provided with a large-diameter through hole, into which an intermediate portion of the supporting shaft 53 having an expanded head is coupled, and this large-diameter hole communicates with the bottomed hole in the intermediate wall.

Then, the small diameter portion of the shaft 53 is inserted from the top into the shaft hole of the upside collar 41 with the downside collar 42 fit in the hole of the intermediate wall. With this arrangement, the base end portion of the swing arm 40 is supported on the base 1 so as to be swingable in a horizontal plane.

The vertical wall of the bracket 51 serves as a stopper, which restricts the horizontal swing range of the swing arm 40 within a predetermined angular range in front of the injection molding machine. The above-described usual position A (or the operational position B) is close to one of the end positions of the swing range of the swing arm 40. And, the retracted point C also close to the other end position of the swing range of the swing arm 40. The swing range is limited so that the display unit 30 can be prevented from contacting or approaching too close to the mold clamping unit 10 and the injection unit 20, especially to the cylinder assembly 22.

The injection molding machine includes the second supporting means 60, which is provided on the front end portion of the swing arm for swingably supporting the display unit 30 with respect to the swing arm 40. The second supporting means 60, includes a hollow cylindrical supporting shaft 61, which is fixed on the upper surface of the front edge portion of the swing arm 40 and extending vertically upward from the swing arm 40, and a hollow cylindrical supporting shaft 62 which is disposed coaxially with the supporting shaft 61 and supported swingably on the supporting shaft 61. A supporting plate 63 is fixed on the top edge of the supporting shaft 62 for mounting the display unit 30.

Though a detail drawing is omitted here, diameter of the supporting shaft 62 is made smaller than that of the supporting shaft 61. But, the supporting shaft 62 has an enlarged lower end portion having substantially the same outer diameter as the supporting shaft 61. Either of the supporting shafts 61 or 62 is integrally formed with an elongated cylindrical portion of a smaller-diameter, which is inserted into the hollow portion of the other of the shaft 61 or 62, so that the supporting shaft 62 can be supported securely on the supporting shaft 61.

A nut 64 is not only engaged with a screw portion formed on the upper outer peripheral surface of the supporting shaft 61 but engaged with the lower enlarged end portion of the supporting shaft 62 to prevent the supporting shaft 61 from coming off the supporting shaft 62.

In Fig. 6, reference numeral 70 denotes a wiring cable disposed without a reinforcing or protective tube such as a conduit. The cable 70 extending from the display unit 30 is connected to the numerical control apparatus and an electric power source via the cable hole (not shown) opening through the surrounding wall of the supporting shaft 62, hollows of the supporting shaft 62, supporting shaft 61, swing arm 40, and the downside collar 42, a cable hole opening through the intermediate wall of the bracket 51, and the inside of the stay 52 and the base 1.

Hereinafter, the operations of thus constituted display unit and its peripheral components will be explained.

During the operation of the injection molding machine, the display unit 30 is placed at its usual position A shown in Fig. 2. In this case, the swing arm 40 extends horizontally along the upper front surface side of the base 1, whereas the display unit 30 is disposed above the base 1 between the mold clamping unit and the injection unit 20 with its CRT screen 31 facing front.

Though the display unit 30 is positioned slightly away outwardly from the base 1 with respect to the widthwise direction of the injection molding machine, it will not obstruct the operator to work around the injection molding machine. The operator monitors operating condition of the injection molding machine by referring to operational information displayed on the CRT screen 31. In this way, it is convenient for the operator in monitoring the operational condition as the CRT screen straightly faces the operator.

The operator can shift the display unit 30 to the operational position B shown in Fig. 3 when necessary. For instance, the operator is allowed to turn the display unit 30 about the supporting shaft 61 by pulling forward the display unit 30 with his hand holding he right-hand side of the display unit. Thus, the angle of the CRT screen 31 can be adjusted in any direction such that the operator standing in front of the operation panel 14 can easily watch the CRT screen 31.

Thus, the operator, for example, with the display unit 30 set to the operational position B, can carry out a mold thickness adjustment after finishing mold exchange operation. In such a situation, the operator can easily monitor the information relating to rear platen shift speed etc. displayed on the CRT screen 31. Thus, the operator can efficiently proceed with his work by manipulating the manual button, die height button, rear platen forward/backward button etc.

Furthermore, in the case where an emergency shutdown message and an alarm message etc. are displayed on the CRT screen, the operator can promptly react to these messages and carry out subsequent works safely.

Moreover, as shown in Fig. 4, sometimes the injection unit 20 is required to be turned horizontally about the swivel shaft 3 when, for example, the screw is changed. In this case, prior to the horizontal turning of the injection unit 20, the display unit 30 is shifted to the retracted position C (Fig. 4) for easier screw change operation without causing the display unit 30 to interefere with the injection unit 20, particularly with the cylinder assembly 22.

To this end, for example, if the operator pulls the front end portion of the swing arm 40 toward operator's side, the display unit 30 turns horizontally about the upside and the downside collars 41, 42 and also about the supporting shaft 53 together with the swing arm 40. Further, the operator adjusts the direction of the display unit 30 by turning the display unit 30 about the supporting shaft 61 when necessary.

The present invention is not limited to the above disclosed embodiment, and therefore it is possible to modify it in various ways.

For example, though the above embodiment adopts the upside and the downside collars 41, 42 which engage with through holes formed on the base end portion of the swing arm 40, these collars 41, 42 can be substituted by a hollow cylindrical supporting shaft 41' shown in Fig 7 so that this hollow cylindrical supporting shaft 41' can be fixed integrally with the base end portion of the swing arm 40. In this case, the cable hole is opened through the circumferential surface of the supporting shaft 41' on the swing arm side.

In the above embodiment, the length of the swing arm 40 is made slightly shorter than the distance between opposing surfaces of the mold clamping unit 10 and the injection unit main body; however, it may be either longer or shorter than that specified in the embodiment.

Furthermore, the above embodiment provides the bracket 51 to serve as the stopper in restricting the horizontal swing range of the swing arm 40 within the predetermined angular range so that the swing arm 40 can be prevented from interfering with mold clamping unit and the injection unit 20; however, a separate stopper may be provided or position-adjustable stopper capable of varying the swing range of the swing arm 40 may also be provided.

Yet further, instead of the display unit having a CRT screen 31, the display unit having a liquid crystal screen or other kind of display unit may also be used.

Moreover, in the above embodiment, the bracket 51 of the first supporting means 50 is fixed to the base 1 between the mold clamping unit and the injection unit 20; however, the bracket 51 may be fixed to the stationary platen cover of the mold clamping unit or to the bottom of the stationary platen cover of the base 1.

## Claims

1. An injection molding machine in which a mold clamping unit (10) and an injection unit (20) are disposed on a base (1) opposite to each other with an operation panel (14) located between them, and said injection molding machine comprises: a first supporting means (50) disposed on an upper front surface of said base (1); a swing arm (40) having a base end portion supported on the base (1) through said first supporting means (50) so as to be swingable in a horizontal plane; a second supporting means (60) provided at a front end portion of said swing arm (40); and a display unit (30) mounted on said second supporting means (60) so as to be swingable with respect to said swing arm (40);
characterised in that: said first supporting means (50) supports the swing arm (40) at substantially the same height as the upper surface of the base (1) with the front end portion of the swing arm (40) extending horizontally at substantially the same height as the upper surface of the base (1); said second supporting means (60) supports the display unit (30) above the swing arm (40); said swing arm (40) has a first position, when positioned at one limit of its swing range, disposed between the mold clamping unit (10) and the injection unit (11) along the upper front surface of the base (1), in which first swing arm position the display unit (30) can itself adopt a first display unit swing position (A) which is a usual position during operation of the injection molding machine in which the display unit (30) faces to the front of the injection molding machine and away therefrom, and can also adopt in said first swing arm position a second display unit swing position (B) wherein the display unit (30) is turned more towards the operation panel (14) for convenience of an operator when standing in front of the operation panel (14); and said swing arm (40) also has a second swing arm position which can be adopted by swinging the swing arm (40) outwardly away from the base (1) so that the display unit (30) adopts a retracted position (C) away from the injection unit (20).

2. An injection molding machine according to claim 1, wherein a stopper is provided for restricting the swing range of said swing arm (40) so that it will not interfere with said mold clamping unit (10) and said injection unit (20).

3. An injection molding machine according to claim 1 or 2, wherein said injection unit (20) includes a main body of the injection unit, and said swing arm (40) is formed to have a length slightly shorter than the distance between opposing surfaces of the mold clamping unit (10) and the main body of said injection unit (20).

4. An injection molding machine according to any preceding claim, wherein the injection unit (20) can be turned horizontally about a swivel shaft (3) when the injection screw is to be changed, this turning being facilitated by the swing arm (40) firstly being put into its said second swing arm position so that the display unit (30) is in its retracted position (C) and does not interfere with the injection unit (20).

## Patentansprüche

1. Spritzgießmaschine, in der eine Formklemmeinheit (10) und eine Einspritzeinheit (20) auf einer Basis (1) sich einander gegenüberstehend angeordnet sind, wobei ein Bedienungsfeld (14) zwischen ihnen angeordnet ist und die Spritzgießmaschine umfaßt:
ein erstes Tragmittel (50), das auf einer oberen vorderen Oberfläche der Basis (1) angeordnet ist,
einen Schwenkarm (40), der einen Basisendteil hat, welcher auf der Basis (1) durch das erste Tragmittel (50) in einer Weise getragen wird, daß er in einer horizontalen Ebene schwenkbar ist,
ein zweites Tragmittel (60), das an einem vorderen Endteil des Schwenkarms (40) vorgesehen ist, und
eine Anzeigeeinheit (30), die auf dem zweiten Tragmittel (60) derart montiert ist, daß sie in bezug auf den Schwenkarm (40) schwenkbar ist,
dadurch **gekennzeichnet,** daß
das erste Tragmittel (50) den Schwenkarm (40) in einer im wesentlichen gleichen Höhe wie derjenigen der oberen Oberfläche des Basis (1) trägt, wobei sich der vordere Endteil des Schwenkarms (40) horizontal in im wesentlichen der gleichen Höhe wie derjenigen der oberen Oberfläche der Basis (1) erstreckt,
das zweite Tragmittel (60) die Anzeigeeinheit (30) oberhalb des Schwenkarms (40) trägt,
der Schwenkarm (40) eine erste Position hat, wenn er an einer Grenze seines Schwenkbereichs positioniert ist, der zwischen der Formklemmeinheit (10) und der Einspritzeinheit (11) längs der oberen vorderen Oberfläche der Basis (1) angeordnet ist, in welcher ersten Schwenkarm-Position die Anzeigeeinheit (30) selbst eine erste Anzeigeeinheit-Schwenkposition (A) einnehmen kann, die eine übliche Position während des Betriebs der Spritzgießmaschine ist, in weicher sich die Anzeigeeinheit (30) der Vorderseite gegenüberstehend und entfernt von dieser befindet, und außerdem in der ersten Schwenkarm-Position eine zweite Anzeigeeinheit-Schwenkposition (B) einnehmen kann, in welcher die Anzeigeeinheit (30) aus Gründen der Bequemlichkeit für eine Bedienungsperson, wenn diese vor dem Bedienungsfeld (14) steht, mehr in Richtung auf das Bedienungsfeld (14) gedreht ist, und
der Schwenkarm (40) außerdem eine zweite Schwenkarm-Position hat, die von dem Schwenkarm (40) außerhalb von der Basis (1) und entfernt von dieser eingenommen werden kann, so daß die Anzeigeeinheit (30) eine von der Einspritzeinheit (20) zurückgezogene Position (C) einnimmt.

2. Spritzgießmaschine nach Anspruch 1, bei der ein Anschlag zum Begrenzen des Schwenkbereichs des Schwenkarms (40) vorgesehen ist, so daß dieser sich nicht gegenseitig mit der Formklemmeinheit (10) und der Einspritzeinheit (20) behindert.

3. Spritzgießmaschine nach Anspruch 1 oder 2, bei der die Einspritzeinheit (20) einen Hauptkörper der Einspritzeinheit enthält und der Schwenkarm (40) derart ausgebildet ist, daß er eine Länge hat, die geringfügig kleiner als die Distanz zwischen sich gegenüberliegenden Oberflächen der Formklemmeinheit (10) und des Hauptkörpers der Einspritzeinheit (20) ist.

4. Spritzgießmaschine nach einem der vorhergehenden Ansprüche, bei der die Einspritzeinheit (20) horizontal um eine Drehwelle (3) gedreht werden kann, wenn die Einspritzförderschnecke auszuwechseln ist, wobei dieses Drehen durch den Schwenkarm (40) erleichert wird, der zunächst in seine zweite Schwenkarm-Position verbracht wird, so daß sich die Anzeigeeinheit (30) in ihrer zurückgezogenen Position (C) befindet und sich nicht gegenseitig mit der Einspritzeinheit (20) behindert.

## Revendications

1. Une machine de moulage par injection dans laquelle un dispositif de serrage de moule (10) et un dispositif d'injection (20) sont disposés sur une embase (1) à l'opposé l'un de l'autre avec un panneau de fonctionnement (14) placé entre eux, ladite machine de moulage par injection comprenant : un premier moyen de support (50) disposé sur une surface avant supérieure de ladite embase (1) ; un bras oscillant (40) présentant une partie d'extrémité de base portée sur l'embase (1) par l'intermédiaire dudit premier moyen de support (50) de manière à pouvoir osciller dans un plan horizontal ; un second moyen de support (60) prévu à une partie d'extrémité avant dudit bras oscillant (40) ; et un dispositif de visualisation (30) monté sur ledit second moyen de support (60) de manière à pouvoir osciller par rapport audit bras oscillant (40) ;
caractérisée en ce que : ledit premier moyen de support (50) porte le bras oscillant (40) sensiblement à la même hauteur que la surface supérieure de l'embase (1) avec la partie d'extrémité avant du bras oscillant (40) s'étendant de manière horizontale sensiblement à la même hauteur que la surface supérieure de l'embase (1) ; ledit second moyen de support (60) porte le dispositif de visualisation (30) au-dessus du bras oscillant (40) ; ledit bras oscillant (40) présente une première position, lorsqu'il est placé à une limite donnée de sa plage d'oscillation, placée entre le dispositif de serrage de moule (10) et le dispositif d'injection (11) le long de la surface avant supérieure de l'embase (1), première position du bras oscillant dans laquelle le dispositif de visualisation (30) peut lui-même adopter une première position (A) d'oscillation du dispositif de visualisation qui constitue une position usuelle pendant le fonctionnement de la machine de moulage par injection dans lequel le dispositif de visualisation (30) est dirigé vers l'avant de la machine de moulage par injection et éloigné de celle-ci, et peut également adopter, dans ladite première position du bras oscillant, une seconde position d'oscillation (B) du dispositif de visualisation dans laquelle le dispositif de visualisation (30) est tourné davantage vers le panneau de fonctionnement (14) pour la commodité d'un opérateur se tenant en face du panneau de fonctionnement (14) ; et ledit bras oscillant (40) présente également une seconde position de bras oscillant qui peut être adopté en faisant osciller le bras oscillant (40) vers l'extérieur en l'éloignant de l'embase (1) de sorte que le dispositif de visualisation (30) adopte une position rétractée (C) éloignée du dispositif d'injection (20).

2. Une machine de moulage par injection selon la revendication 1, dans laquelle un organe d'arrêt est prévu pour limiter la plage d'oscillation dudit bras oscillant (40) de manière qu'il n'interfère pas avec ledit dispositif de serrage de moule (10) et ledit dispositif d'injection (20).

3. Une machine de moulage par injection selon la revendication 1 ou 2, dans laquelle ledit dispositif d'injection (20) comprend un corps principal du dispositif d'injection, et dans laquelle ledit bras oscillant (40) est réalisé pour présenter une longueur légèrement plus courte que la distance entre les surfaces opposées du dispositif de serrage de moule (10) et du corps principal dudit dispositif d'injection (20).

4. Une machine de moulage par injection selon une quelconque des revendications précédentes, dans laquelle le dispositif d'injection (20) peut être tourné horizontalement autour d'un arbre d'oscillation (3) lorsque la vis d'injection doit être changée, cette rotation étant facilitée par le fait que le bras oscillant (40) est tout d'abord mis dans ladite seconde position du bras oscillant de sorte que le dispositif de visualisation (30) est dans sa position rétractée (C) et n'interfère pas avec le dispositif d'injection (20).
